# EUROPÄISCHE PATENTSCHRIFT

(11) **EP 2 533 984 B1**
(45) Veröffentlichungstag und Bekanntmachung des Hinweises auf die Patenterteilung: **08.04.2015**
(21) Anmeldenummer: 11704580.7
(22) Anmeldetag: 09.02.2011
(51) Int. Cl.: B60B 27/02, B60B 27/04

(54) **FAHRRADNABE SOWIE VERFAHREN ZU DEREN HERSTELLUNG**
BICYCLE HUB AND METHOD FOR THE PRODUCTION THEREOF
MOYEU DE BICYCLETTE ET PROCÉDÉ DE FABRICATION DE CELUI-CI

(30) Priorität: 09.02.2010 DE 102010000343
(43) Veröffentlichungstag der Anmeldung: 19.12.2012
(73) Patentinhaber: Griemla, Stefan, 40470 Düsseldorf (DE); Griemla, Nicole, 48431 Rheine (DE)
(72) Erfinder: GRIEMLA, Horst, 33803 Steinhagen (DE)
(74) Vertreter: Dantz, Jan Henning
(86) Internationale Anmeldenummer: PCT/EP2011/051879
(87) Internationale Veröffentlichungsnummer: WO 2011/098476

(56) Entgegenhaltungen:
- DE-A1- 2 906 627
- DE-U1- 29 707 001
- FR-A- 475 722
- FR-A- 576 128
- FR-A3- 2 732 733

## Beschreibung

Die Erfindung betrifft eine Fahrradnabe nach dem Oberbegriff des Anspruchs 1 sowie ein Verfahren zu deren Herstellung.

Fahrradnaben, insbesondere solche, die eine Innenverzahnung für eine Rücktrittbremse mit Freilauf sowie eine Innenverzahnung als Korrespondenzteil einer Nabenschaltung aufweisen, werden bislang aus einem Rohr geschmiedet und durch zerspanendes Bearbeiten fertig gestellt, wozu neben der Einbringung der Innenverzahnungen auch ein Bohren von Löchern der angeformten Kränze zählt, in die Speichen eingehängt werden. Die endseitigen, innenliegenden Kugellaufbahnen sind ebenfalls durch Zerspanen, konkret durch Ausdrehen gefertigt.

Naturgemäß sind diese Arbeitsgänge nur mit einem erheblichen Aufwand durchführbar, der zu entsprechend hohen Fertigungskosten führt, so dass die bekannten Fahrradnaben im Verhältnis zu den übrigen Teilen eines Fahrrades außerordentlich teuer sind.

Darüber hinaus sind diese geschmiedeten Fahrradnaben relativ schwer, da sie als Voraussetzung für die Formgebung sowohl des Schmiedens wie auch des Zerspanens eine entsprechend dicke Wand aufweisen müssen.

Dies relativ hohe Gewicht steht jedoch Forderungen entgegen, nach denen die Bauteile prinzipiell gewichtsoptimiert im Sinne von gewichtsreduziert gestaltet sein sollen.

Zur Vermeidung dieser Nachteile wird in der gattungsbildenden DE 29 06 627 C2 vorgeschlagen, die Fahrradnabe als Blechformteil mit zwei Nabenteilen auszubilden, die jeweils durch Tiefziehen hergestellt sind.

Die beiden Nabenteile sind form- oder stoffschlüssig miteinander verbunden, wobei als Formschluss ein Verpressen oder Vernieten vorgeschlagen wird, während der Stoffschluss durch Verkleben oder Verschweißen erreicht werden soll.

Zur Verpressung ist eine Deformation erforderlich, was den Rundlauf der Fahrradnabe beeinträchtigen kann. Das Verschweißen hingegen führt zu einem Verzug der Nabenteile, der nur durch entsprechende Richtarbeiten beseitigt werden kann.

In jedem Fall sind zusätzliche, kostensteigernde Arbeitsgänge erforderlich, um die beiden Nabenteile miteinander zu verbinden.

Im Übrigen führt die bekannte Konstruktion zu unterschiedlichen Durchmessern der Kugellaufbahnen, wodurch sich Verwendungsnachteile ergeben. Insbesondere ist es nicht möglich, eines der beiden Nabenteile als Basisteil für unterschiedliche, im Innern der Fahrradnabe positionierte Nabenschaltungen zu nutzen.

Eine gewünschte Gewichtsoptimierung der Fahrradnabe ist begrenzt durch die im Bereich der Kugellaufbahnen auftretenden Belastungen im Fahrbetrieb, die eine entsprechende Wandstärke der Nabenteile erfordern, die bei den bekannten Fahrradnaben im Wesentlichen durchgängig sind, d.h., die Wanddicke bemisst sich ausschließlich an der angesprochenen Belastung.

Als weiterer Nachteil der bekannten Fahrradnabe ist anzusehen, dass die beiden Radkränze, bezogen auf ihren Abstand zur jeweils zugeordneten Stirnseite der Fahrradnabe unterschiedlich sind, so dass ein Endbereich der Fahrradnabe nach außen hin über die angeschlossenen Speichen vorsteht.

Vornehmlich durch Schweißen oder Löten sind auch die beiden Kränze an der Hülse einer Fahrradnabe befestigt, die in der US 2 997 145 gezeigt und beschrieben ist. Insofern treten die zuvor zum Stoffschluss beschriebenen Nachteile auch bei dieser Fahrradnabe auf.

In der FR 2 732 733 A3 ist eine Fahrradnabe offenbart, aus der allerdings die Herstellungsart nicht entnehmbar ist. Eine Außenwand der jeweiligen Lagerstelle liegt an einer Innenwand an, die unter Bildung einer Kugellaufbahn konkav geformt ist, wobei die Außenwand tangential die Innenwand im Bereich der Kugellaufbahn berührt.

Der Erfindung liegt die Aufgabe zugrunde, eine Fahrradnabe der gattungsgemäßen Art so weiterzuentwickeln, dass bei verbesserter Belastbarkeit das eingesetz te Blech eine geringere Wandstärke aufweisen kann und eine vereinfachte und kostengünstigere Herstellung möglich ist.

Diese Aufgabe wird durch eine Fahrradnabe mit den Merkmalen des Anspruchs 1 sowie ein Verfahren zu deren Herstellung gelöst.

Durch die Herstellung einer Doppelwand im Bereich der jeweiligen Kugellaufbahn, die entsprechend dem erfindungsgemäßen Verfahren durch Stülpen hergestellt wird, wobei eine gebildete Innen- unmittelbar an einer gebildeten Außenwand anliegt, wird eine sehr hohe Belastungsfähigkeit der Kugellaufbahnen erreicht, die eine Minimierung der Blechdicke erlaubt, die vorzugsweise 1,8 mm beträgt.

Bevorzugt wird die Fahrradnabe einstückig durch Tiefziehen und Umformen einer Metallronde, insbesondere einer geschlossenen Ronde, hergestellt, wobei nach einem Tiefziehen zu einem Topf der Boden abgetrennt wird und die Endbereiche entsprechend umgeformt werden.

Die Einstückigkeit der Fahrradnabe ermöglicht eine außerordentlich kostengünstige Herstellung, da zum einen praktisch alle Arbeitsgänge in einem unterbrechungsfreien kontinuierlichen maschinellen Ablauf möglich sind und zum anderen der Materialeinsatz optimiert ist.

Denkbar ist jedoch auch, die Endbereiche jeweils einzeln herzustellen und durch die dann als separates Teil ausgebildete Hülse miteinander zu verbinden oder einer der Endbereiche ist an die Hülse angeformt, so dass beide Teile einstückig sind. Der andere Endbereich als separater Nabenteil ist auf der dem angeformten Endbereich gegenüberliegenden Seite auf die Hülse aufgesteckt.

Die Verbindung des oder der Endbereiche mit der Hülse erfolgt dabei reibschlüssig, wozu die miteinander korrespondierenden Durchmesser im Sinne einer Presspassung dimensioniert sind. Wie sich überraschend gezeigt hat, wird durch den Reibschluss eine verdrehfeste Verbindung der Nabenteile erreicht, die allen Belastungen in ausreichendem Maße standhält.

Da, im Gegensatz zum Stand der Technik, zur Verbindung die einzelnen Bauteile nicht mehr erwärmt werden müssen, besteht auch nicht die Gefahr des Entstehens von Wärmespannungen und daraus resultierend eines Verziehens, so dass durch die Erfindung eine wesentliche Qualitätsverbesserung, zumindest ohne Nachbearbeitung gegeben ist.

Die Endbereiche bzw. ein Endbereich mit angeschlossener Hülse werden aus einer Ronde hergestellt, die bevorzugt in geschlossener Form vorliegt, so dass mit einem ersten Arbeitsschritt "Tiefziehen" ein Topf geformt wird, dessen Boden anschließend ausgeschnitten wird, so dass sich ein beidseitig offenes Nabenteil ergibt.

Die Anformung des jeweiligen Kranzes erfolgt erfindungsgemäß durch Stülpen des Endbereiches und anschließendes Abwinkeln radial nach außen. Der zugeordnete Randbereich der Innenseite wird zu einer Kugellaufbahn geformt.

Das Stülpen, Anformen des Kranzes und Einformen der Kugellaufbahn kann in einem Arbeitsgang erfolgen. Daran schließt sich ein Lochen des Kranzes an, bei dem die Löcher zum Einhängen der Speichen durch Stanzen hergestellt werden.

Zur Funktion einer Nabenschaltung sind Innenverzahnungen erforderlich, die durch Kaltverformen hergestellt werden, wobei die Innenverzahnungen umlaufend an einem der beiden Nabenteile oder jeweils an beiden Nabenteilen vorgesehen sein können.

Besonders einfach sind die Innenverzahnungen durch Eindrücken der zylindrischen Wandung der Hülse herstellbar.

Das erfindungsgemäße Verfahren ist in einem automatischen Arbeitsablauf durchführbar, wobei entsprechende Umformmaschinen nacheinander geschaltet sind, während das jeweilige Halbzeug, aus denen letztendlich die Fahrradnabe fertiggestellt wird, durch Beschickungsautomaten zuführbar ist.

Dieser automatische Arbeitsablauf führt zu einer außerordentlich preiswerten Herstellung der Fahrradnabe, da u.a. die Fertigungszeit wesentlich kürzer ist als die bei einer Fahrradnabe nach dem Stand der Technik.

Zur Kostenminimierung trägt überdies der verhältnismäßig geringe Materialeinsatz bei, der sich vor allem aus der relativ dünnen Wandstärke des eingesetzten Blechs ergibt, das durch die Doppelung der Wand im Bereich der Kugellaufbahnen eine ausreichende Stabilität erfährt.

Nach einem weiteren Gedanken der Erfindung ist vorgesehen die Dopplung bis in einen Überdeckungsbereich mit Bremsbacken zu führen, die Bestandteil einer Rücktrittsbremse sind und die in Funktion, also bei einer Bremsung, an die Innenwandung der Hülse gepresst werden. Die dabei auftretenden radialen Kräfte werden durch die Doppelwandung aufgenommen, so dass eine Verformung der Fahrradnabe in diesem Bereich praktisch ausgeschlossen ist.

Trotz der geringen Wanddicke, die im Übrigen bei der Verformung hin zu den Nabenteilen im Wesentlichen gleich bleibt, ist die notwendige Stabilität der neuen Fahrradnabe gewährleistet. Hierzu trägt auch bei, dass durch die Verformung zu den Nabenteilen umlaufende Sicken gebildet werden, beispielsweise im Bereich der Kränze, durch die die Formstabilität noch vergrößert wird.

Naturgemäß hat das geringe Gewicht der neuen Fahrradnabe Auswirkungen auf das Gesamtgewicht des Fahrrades, in das solche Fahrradnaben eingebaut werden, wobei die erfindungsgemäßen Fahrradnaben, entsprechend modifiziert, sowohl für das Hinter- wie auch das Vorderrad Verwendung finden.

Weitere vorteilhafte Ausbildungen der Erfindung sind in den Unteransprüchen gekennzeichnet.

Das erfindungsgemäße Verfahren wird nachfolgend anhand der in den beigefügten Zeichnungen dargestellten Ausführungsbeispiele einer neuen Fahrradnabe nochmals erläutert.

Es zeigen:
- Figur 1: ein Ausführungsbeispiel einer Fahrradnabe in einem Längsschnitt
- Figuren 2 und 3: jeweils eine Draufsicht auf die Fahrradnabe
- Figur 4: eine Einzelheit der Fahrradnabe nach Figur 1 in einem Längsschnitt
- Figur 5: eine weitere Einzelheit der Fahrradnabe, ebenfalls in einem Längsschnitt
- Figur 6: ein weiteres Ausführungsbeispiel einer Fahrradnabe in einem Längsschnitt
- Figur 7: ein weiteres Ausführungsbeispiel einer Fahrradnabe, ebenfalls in einem Längsschnitt.

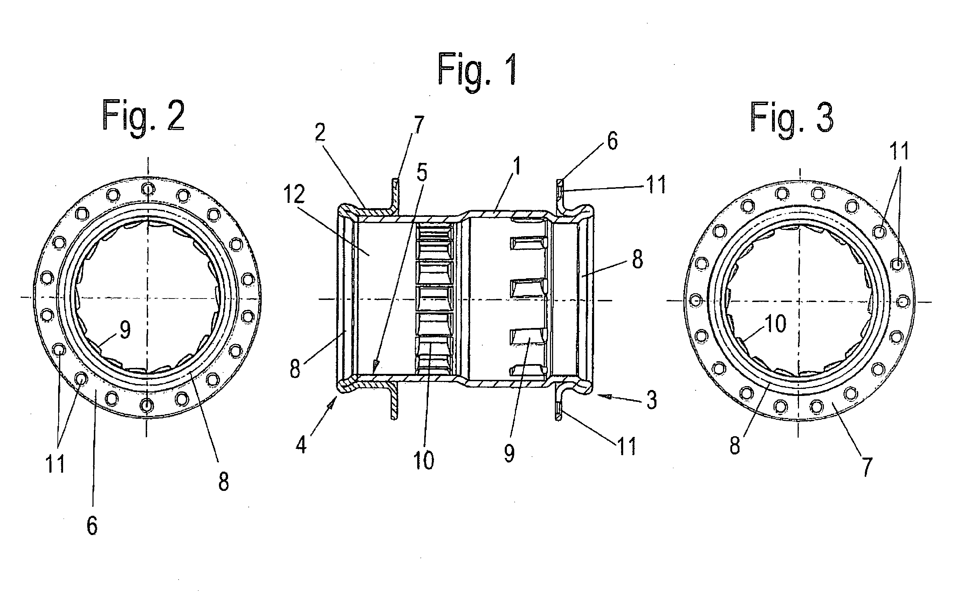

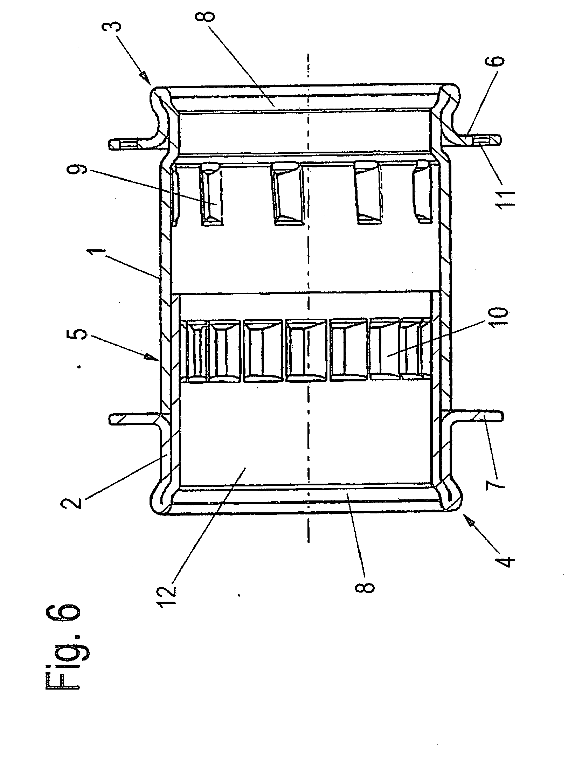

In den Figuren 1 und 6 ist jeweils eine Fahrradnabe dargestellt, die aus zwei reibschlüssig miteinander verbundenen Nabenteilen 1, 2 besteht, die jeweils an den einander gegenüberliegenden Seiten einen Endbereich 3, 4 aufweisen, in denen endseitig innen liegende Kugellaufbahnen 8 eingeformt sind zur Aufnahme von Wälzkugeln.

Jeder Endbereich 3, 4 ist im Bereich der Kugellaufbahn 8 als Doppelwand ausgebildet, an deren Außenwand sich ein Kranz 6, 7 anschließt, mit Löchern 11 zur Aufnahme von Speichen. Die Doppelwand erstreckt sich darüber hinaus, zumindest bis in einen Bereich 12, der durch eine Anlage von nicht dargestellten Bremsbacken einer im Innern der Fahrradnabe positionierten Rücktrittsbremse definiert ist.

Die Kränze 6, 7 sind durch eine Hülse 5 abständig zueinander gehalten, die in den Ausführungsbeispielen an den einen Endbereich 3 angeformt ist.

Die Fahrradnabe wird durch folgende Verfahrensschritte hergestellt:
- Tiefziehen der beiden Nabenteile 1, 2 aus je einer Ronde,
- Stülpen des rohrförmigen Endbereiches 3, 4 des jeweiligen Nabenteiles, unter Bildung einer Innen- und einer anliegenden Außenwand zu einer Doppelwand,
- Abwinkeln der Außenwand zu dem radial umlaufenden Kranz 6, 7
- Formen der Innenwand des Endbereiches 3, 4 zur Kugellaufbahn 8,
- Lochen des Kranzes 6, 7
- Ineinanderstecken der beiden Nabenteile 1, 2.

Weiterhin sind zwei parallel und abständig zueinander angeordnete umlaufende Innenverzahnungen 9, 10 für eine Nabenschaltung vorgesehen, von denen eine funktional einem Rücktritt mit Freilauf zugeordnet ist.

Die Innenverzahnungen 9, 10 sind ebenso wie die übrigen Verformungen durch Kaltverformen hergestellt, wobei die Zähne der Innenverzahnungen 9, 10 von außen her eingedrückt sind.

Bei dem in der Figur 1 gezeigten Beispiel sind beide Innenverzahnungen 9, 10 in das erste Nabenteil 1 eingebracht.

Die Kugellaufbahn 8 des zweiten Nabenteiles 2 ist durch Einziehen der Innenwandung der in diesem Bereich gebildeten Doppelwand hergestellt, deren Außenwand an der Hülse 5 bevorzugt reibschlüssig anliegt.

Dabei stützt sich die freie Stirnseite der Kugellaufbahn 8 an der Stirnseite der Hülse 5 ab.

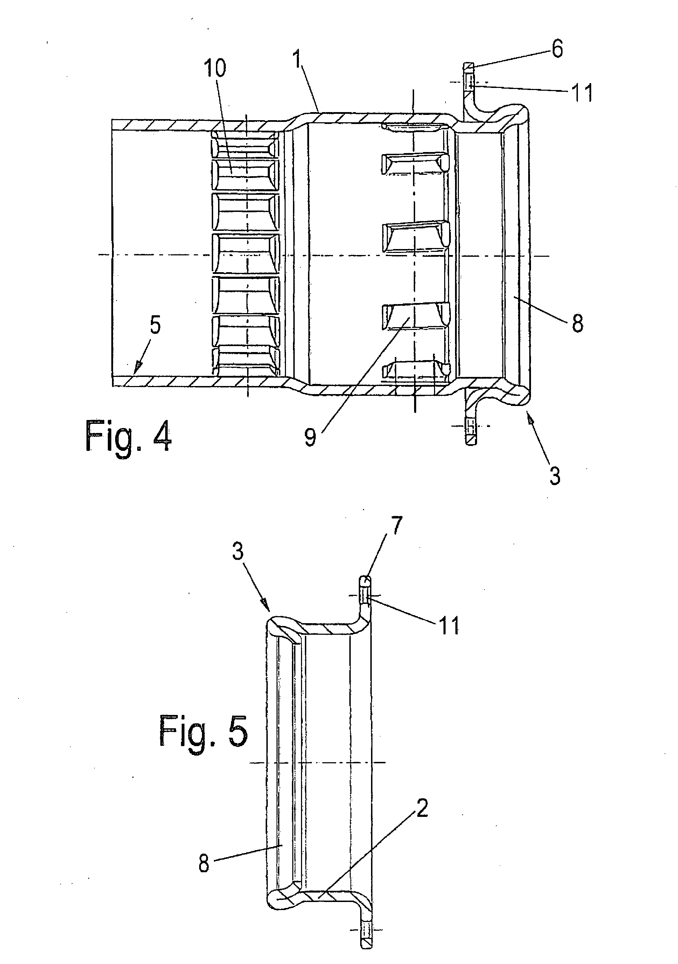

In der Figur 4 ist das erste Nabenteil 1 als Einzelheit erkennbar, entsprechend dem Ausführungsbeispiel nach Figur 1. Es ist zu sehen, dass der Kranz 6 durch Stülpen des durch Tiefziehen hergestellten Nabenteiles 1 geführt ist und sich radial, abständig von der Endseite nach außen hin erstreckt.

In der Figur 5 ist das zweite Nabenteil 2 als Einzelheit gezeigt, das auf die zylindrische Hülse 5 des ersten Nabenteiles 1 aufgepresst wird, bis die freie Stirnseite der Kugellaufbahn 8 an der Stirnseite der Hülse 5 zur Anlage kommt.

Ein weiteres Ausführungsbeispiel der neuen Fahrradnabe ist in der Figur 6 gezeigt. Hier weist das erste Nabenteil 1 lediglich eine Innenverzahnung 9 auf, während die andere Innenverzahnung 10 in das zweite Nabenteil 2 eingeformt ist.

Durch Stülpen des Endbereiches 4 des zweiten Nabenteiles 2 und Abwinkeln wird der radial nach außen gerichtete Kranz 7 geformt. Die Innenwand des zweiten Nabenteiles 2 bildet im Überdeckungsbereich mit dem ersten Nabenteil 1 eine Innenwandung, während das erste Nabenteil 2 stirnseitig am Kranz 7 anliegt, der damit einen Anschlag beim Aufschieben des ersten 1 auf das zweite Nabenteil 2 darstellt. Beide Wände bilden dabei einen Teil der Hülse 5.

Die zweiteilige Ausbildung der gezeigten Ausführungsbeispiele bietet die Möglichkeit, das die Rücktrittsbremse aufnehmende zweite Nabenteil 2 gleichbleibend, also konfektioniert, auszubilden, während das die Nabenschaltung aufnehmende erste Nabenteil 1, je nach Ausführung der Nabenschaltung entsprechend einer veränderten Gangzahl auszuführen, d.h. im Durchmesser zu variieren. Lediglich der zum Reibschluss erforderliche Überdeckungsbereich des ersten Nabenteiles 1 ist bei jeder Ausführungsvariante daran angepasst.

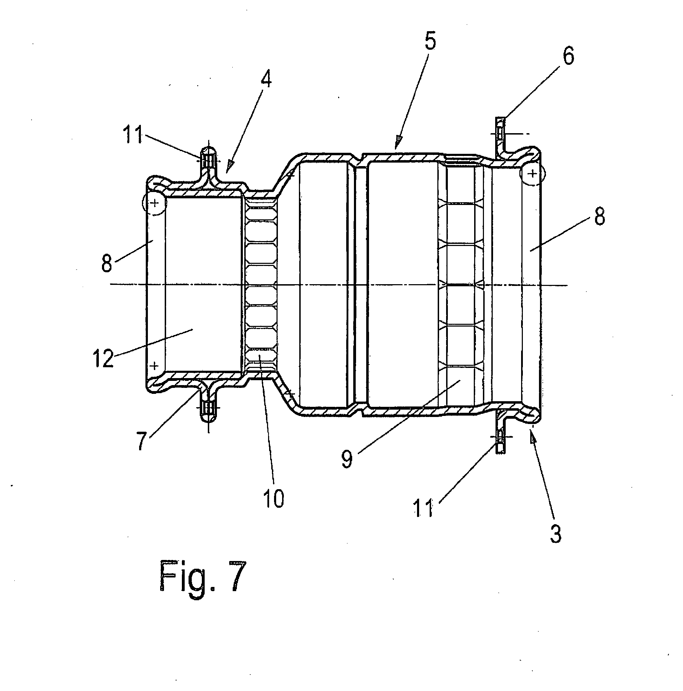

In der Figur 7 ist eine Fahrradnabe dargestellt, die einstückig aus einer Ronde gebildet ist.

Hierbei ist der rechte Endbereich 3 mit seinem Kranz 6 entsprechend dem in den Figuren 1 und 6 dargestellten geformt.

Bei dem gegenüberliegenden Endbereich 4 hingegen ist der Kranz 7 durch Faltung hergestellt, so dass er doppellagig ausgebildet ist, während die Doppelwandung des Endbereiches 4 durch Einziehen und achsparallele Rückführung der Hülse 5 hergestellt ist, wobei die Doppelwand des Endbereiches 4 den Kranz 7 überdeckt. Bei dieser Ausführungsvariante sind die Innenverzahnungen 9,10 abständig zueinander in die Hülse 5 eingebracht.

### Bezugszeichenliste

- 1: Nabenteil
- 2: Nabenteil
- 3: Endbereich
- 4: Endbereich
- 5: Hülse
- 6: Kranz
- 7: Kranz
- 8: Kugellaufbahn
- 9: Innenverzahnung
- 10: Innenverzahnung
- 11: Loch
- 12: Bereich

## Patentansprüche

1. Als Blechformteil ausgebildete Fahrradnabe, mit zwei in den Endbereichen (3, 4) angeordneten Löcher (11) zur Aufnahme von Speichen aufweisenden, radial nach außen abgewinkelten Kränzen (6, 7), die durch eine Hülse (5) abständig zueinander gehalten sind, sowie endseitigen, radial innenliegenden Kugellaufbahnen (8), **dadurch gekennzeichnet, dass** jeder Endbereich (3, 4) zumindest im Bereich der Kugellaufbahn (8) unter Bildung einer Innenwand und einer unmittelbar anliegenden Außenwand als Doppelwand geformt ist, wobei sich der Kranz (6, 7) an die Außenwand anschließt.

2. Fahrradnabe nach Anspruch 1, **dadurch gekennzeichnet, dass** diese einstückig ausgebildet ist.

3. Fahrradnabe nach Anspruch 1, **dadurch gekennzeichnet, dass** diese aus mehreren, reibschlüssig miteinander verbundenen Nabenteilen (1, 2) besteht.

4. Fahrradnabe nach einem der vorhergehenden Ansprüche, **dadurch gekennzeichnet, dass** die Doppelwand zumindest einen Bereich (12) überdeckt, der durch in Funktion anliegende Bremsbacken einer Rücktrittsbremse definiert ist.

5. Fahrradnabe nach einem der vorhergehenden Ansprüche, **dadurch gekennzeichnet, dass** die Endbereiche (3, 4) und die Hülse (5) jeweils als separate Teile ausgebildet sind.

6. Fahrradnabe nach einem der vorhergehenden Ansprüche, **dadurch gekennzeichnet, dass** ein Endbereich (3) einstückig mit der Hülse (5) augebildet ist.

7. Fahrradnabe nach einem der vorhergehenden Ansprüche, **dadurch gekennzeichnet**, **dass** die Hülse (5) abständig zueinander angeordnet oder das erste und/oder das zweite Nabenteil (1, 2) jeweils eine Innenverzahnung (9, 10) aufweisen.

8. Verfahren zur Herstellung einer Fahrradnabe, mit zwei, in den Endbereichen (3, 4) angeordneten, Löcher (11) zur Aufnahme von Speichen aufweisenden Kränzen (6, 7), die durch eine Hülse (5) abständig zueinander gehalten sind, sowie endseitigen, radial innenliegenden Kugellaufbahnen (8), wobei die Endbereiche (3, 4) durch Tiefziehen gebildet und der jeweils zugeordnete Kranz (6, 7) und die jeweilige Kugellaufbahn (8) spanlos angeformt werden, **dadurch gekennzeichnet, das** jeder Endbereich (3, 4) unter Bildung einer Innen- und einer Außenwand zu einer Doppelwand zumindest im Bereich der Kugellaufbahn (8) durch Stülpen und die Kränze (6, 7) durch Abwinkeln und/oder Falten der Außenwandung aus einer Ronde hergestellt werden.

9. Verfahren nach Anspruch 8, **dadurch gekennzeichnet**, das die Hülse (5) und die angeschlossenen Endbereiche durch Tiefziehen einer vorzugsweise geschlossenen Ronde einstückig ausgebildet werden.

10. Verfahren nach Anspruch 8 oder 9, **dadurch gekennzeichnet**, dass die Endbereiche (3, 4) aus Nabenteilen (1, 2) gebildet werden, die jeweils aus einer geschlossenen Ronde zu einem Topf tiefgezogen werden und der gebildete Boden, vorzugsweise durch Lochen entfernt wird.

11. Verfahren nach einem der Ansprüche 8-10, **dadurch** gekennzeichnet, **dass** zumindest eine Kugellaufbahn (8) durch Einziehen nach innen hergestellt wird.

12. Verfahren nach einem der Ansprüche 8-11, **dadurch gekennzeichnet, dass** in die Hülse (5) eine umlaufende Innenverzahnung (9, 10) eingeformt wird.

13. Verfahren nach einem der Ansprüche 8-12, **dadurch gekennzeichnet**, **dass** die Formung der Innenverzahnung (9, 10) durch Eindrücken von der Außenseite her erfolgt.

## Claims

1. Bicycle hub designed as a sheet metal part, with two hub flanges (6, 7) bent radially outwards, located at the end sections (3, 4), having holes (11) for accommodating spokes, and held together at a predetermined distance by a sleeve (5), also having radial inner ball tracks (8) located at the end sections, **characterized in that** each of the end sections (3, 4), at least in the area of the ball track (8), is formed into a double wall comprising an inner wall and an abutting outer wall, whereby the hub flanges (6, 7) is attached to the outer wall.

2. Bicycle hub according to Claim 1, **characterized in that** it is designed as a single piece.

3. Bicycle hub according to Claim 1, **characterized in that** it comprises several hub elements (1, 2) connected to one another by friction locking.

4. Bicycle hub according to any one of the preceding claims, **characterized in that** the double wall overlaps at least one area (12), which is defined by the brake shoe of a back-pedal brake that fits closely when deployed.

5. Bicycle hub according to any one of the preceding claims, **characterized in that** the end sections (3, 4) and the sleeve (5) are each designed as separate parts.

6. Bicycle hub according to any one of the preceding claims, **characterized in that** one end section (3) is designed to be integral with the sleeve (5).

7. Bicycle hub according to any one of the preceding claims, **characterized in that** the sleeve (5) located at a predetermined distance to one another or each of the first and/or the second hub element (1, 2) has internal gear teeth (9, 10).

8. Process for producing a bicycle hub, with two hub flanges (6, 7) located at the end sections (3, 4), having holes (8) for accommodating spokes, and held together at a certain distance by a sleeve (5), as well as with radial inner ball tracks (8) at the end sections, whereby the end sections (3, 4) are formed by deep drawing and each of the associated hub flanges (6, 7) and the respective ball track (8) is formed non-cutting, **characterized in that** each end section (3, 4) that forms a double wall comprising an inner and an outer wall at least in the ball track area (8) is manufactured by reverse drawing while the hub flanges (6, 7) are manufactured from a round blank by bending and/or folding the outer wall.

9. Process according to Claim 8, **characterized in that** the sleeve (5) and the attached end sections are designed as a single piece by deep drawing a preferably closed round blank.

10. Process according to Claim 8 or 9, **characterized in that** the end sections (3, 4) are formed from hub elements (1, 2), each of which is deep drawn into a cup from a closed round blank, and that the base that is formed is removed preferably by punching.

11. Process according to any one of the Claims 8-10, **characterized in that** at least one ball track (8) is manufactured by drawing inward.

12. Process according to any one of the Claims 8-11, **characterized in that** a circumferential set of internal gear teeth (9, 10) is formed in the sleeve (5).

13. Process according to one of the Claims 8-12, **characterized in that** the internal gear teeth (9, 10) are formed by pressing them in from the outside.

## Revendications

1. Moyeu de bicyclette réalisé sous la forme d'une pièce usinée en tôle comportant deux jantes (6, 7) repliées radialement vers l'extérieur, située dans ses zones d'extrémité (3, 4) comprenant des trous (11) de réception de rayons et qui sont maintenues à distance l'une de l'autre par un manchon (5) ainsi que des pistes de roulement à billes (8) d'extrémité situées radialement vers l'intérieur,
**caractérisé en ce que**
chaque zone d'extrémité (3, 4) est réalisée, au moins dans la zone de la piste de roulement à billes (8) sous la forme d'une double paroi par formation d'une paroi interne et d'une paroi externe directement adjacentes, la jante (6, 7) se raccordant à la paroi externe.

2. Moyeu de roue de bicyclette conforme à la revendication 1,
**caractérisé en ce qu'**
il est réalisé en une seule pièce.

3. Moyeu de roue de bicyclette conforme à la revendication 1,
**caractérisé en ce qu'**
il est constitué de plusieurs parties de moyeu (1, 2) reliées entre elles par une liaison par friction.

4. Moyeu de roue de bicyclette conforme l'une des revendications précédentes,
**caractérisé en ce que**
la double paroi recouvre au moins une zone (12) qui est définie par des mâchoires de frein d'un frein à contre pédalage s'y appliquant en fonctionnement.

5. Moyeu de roue de bicyclette conforme à l'une des revendications précédentes,
**caractérisé en ce que**
les zones d'extrémité (3, 4) et le manchon (5) sont respectivement réalisés sous la forme de parties séparées.

6. Moyeu de roue de bicyclette conforme à l'une des revendications précédentes,
**caractérisé en ce qu'**
une zone d'extrémité (3) est réalisée en une seule pièce avec le manchon (5).

7. Moyeu de roue de bicyclette conforme à l'une des revendications précédentes,
**caractérisé en ce que**
le manchon (5) ou la première partie de moyeu et/ou la seconde partie de moyeu (1, 2) comporte(nt) respectivement une denture interne (9, 10) située à distance.

8. Procédé d'obtention d'un moyeu de bicyclette comprenant deux jantes (6, 7) situées dans ses zones d'extrémités (3, 4), comprenant des trous (11) de réception de rayons et qui sont maintenues à distance l'une de l'autre par un manchon (5), ainsi que des pistes de roulement à billes (8) d'extrémité situées radialement à l'intérieur, les zones d'extrémité (3, 4) étant formées par emboutissage profond et la jante (6, 7) respectivement associée ainsi que les pistes de roulement à billes (8) respectives étant formées sans enlèvement de copeaux,
**caractérisé en ce que**
chaque partie d'extrémité (3, 4) est obtenue par rabattement à partir d'un flan circulaire en une double paroi par formation d'une paroi interne et d'une paroi externe au moins dans la zone de la piste de roulement à billes (8) tandis que les jantes (6, 7) sont obtenues par coudage et/ou pliage de la paroi externe.

9. Procédé conforme à la revendication 8,
**caractérisé en ce que**
le manchon (5) et les zones d'extrémité reliées à celui-ci sont réalisées en une seule pièce par emboutissage profond d'un flanc circulaire de préférence fermé.

10. Procédé conforme à la revendication 8 ou 9,
**caractérisé en ce que**
les zones d'extrémité (3, 4) sont formées de parties de moyeu (1, 2) qui ont respectivement été soumises à un emboutissage profond à partir d'un flan circulaire fermé de façon à obtenir un élément en forme de pot et les fonds obtenus sont enlevés de préférence par poinçonnage.

11. Procédé conforme à l'une des revendications 8 à 10,
**caractérisé en ce qu'**
au moins une piste de roulements à billes (8) est obtenue par rétraction vers l'intérieur.

12. Procédé conforme à l'une des revendications 8 à 11,
**caractérisé en ce qu'**
une denture interne (9, 10) périphérique est formée dans le manchon (5).

13. Procédé conforme à l'une des revendications 8 à 12,
**caractérisé en ce que**
la denture interne (9, 10) est formée par enfoncement à partir de la face externe.
